# EUROPEAN PATENT SPECIFICATION

(11) **EP 1 511 184 B1**
(45) Date of publication and mention of the grant of the patent: **28.03.2007**
(21) Application number: 03019190.2
(22) Date of filing: 25.08.2003
(51) Int. Cl.: H04B 1/40, H04B 1/38

(54) **Antenna switch structure for a mobile terminal of a wireless communication system**
Antennenschalterstruktur für ein mobiles Endgerät in einem drahtlosen Kommunikationssystem
Structure de commutateur d'antenne pour un terminal mobile d'un système de communication sans fil

(43) Date of publication of application: 02.03.2005
(73) Proprietor: Sony Ericsson Mobile Communications AB, 221 88 Lund (SE)
(72) Inventor: Itkin, Grigory, Sony Ericsson Mobile Com.Inter. AB, 85609 Aschheim-Dornach (DE)
(74) Representative: Körber, Martin Hans

(56) References cited:
- EP-A- 0 823 751
- DE-A- 10 200 048
- FR-A- 2 783 654
- US-A1- 2003 119 457
- US-B1- 6 411 831

## Description

The invention relates to an antenna switch structure for a mobile terminal of a wireless communication system according to claim 1.

Mobile terminals for wireless communication are used in different communication standards such as GSM, DCS or UMTS. Each of these communication standards cover and use different frequency bands. A mobile terminal to be used with different standards therefore requires a system able for transmitting, receiving and processing signals of different frequency bands.

Document WO 03/015301 A1 discloses a multiband antenna switch circuit including a diplexer connected to an antenna terminal for demultiplexing signals of different passing bands, a first and a second switch circuit for switching a high frequency signal and a low frequency signal demultiplexed by the diplexer to a plurality of transmission/reception terminals and further several filters implemented in the antenna switch circuit.

Document US 2002/0068530 A1 discloses a communication system for communicating RF signals at a plurality of communication standards through a common antenna. The communication system includes a transmitter having transmitter outputs for generating transmit band signals in the transmit bands of each supported communication standard, and a receiver having receiver inputs for receiving receive band signals in the receive bands of each supported communication standard. Further, a plurality of switches either couple the transmitter output or the receiver input associated with a particular communication standard to the common antenna.

The disadvantage of the described systems is the use of a common antenna for different communication standards which requires a lot of filters, switches and multiplexing or demultiplexing means for coupling the respective receiver or transmitter to the common antenna. This leads to an increase of insertion losses in each band and decreases the radiated efficiency.

Document EP 0823751 A2 discloses antenna switching circuits for radio telephones for coupling first and second transceivers of a dual band radio telephone to integral and external antennas. The circuitry uses impedance matching lengths of transmission lines and switches arranged to provide a minimum insertion loss. Also disclosed is an antenna switching arrangement for a dual band phone that eliminates a requirement for duplexers.

Document US 2003/0119457 A1 discloses a system for eliminating the effects of antenna coupling by increasing the isolation between closely mounted antennas on a portable wireless communications device. Increased isolation is achieved by providing a ceramic resonator in the path of each of the antennas. The ceramic resonator placed in the path of a particular antenna eliminates the effects of coupling caused by a particular one of the other antennas by rejecting signals associated with the particular antenna.

It is therefore an object of the present invention to provide an antenna switch structure for a mobile terminal used for wireless communication with different communication standards, which ensures low insertion losses an increases the radiated efficiency.

This object is achieved by an antenna switch structure as defined in claim 1. Further embodiments of the invention are set out in the independent claims.

According to the present invention, an antenna switch structure for a mobile terminal of a wireless communication system is described comprising a first transceiver for processing signals of a first frequency band, a second transceiver for processing signals of a second frequency band, a first antenna for transmitting and receiving wireless signals of said first frequency band, a second antenna for transmitting and receiving wireless signals of said second frequency band, a first switch for selectively connecting the first transceiver to the first antenna or to a connector for an external antenna, a second switch for selectively connecting the second transceiver to the second antenna or to said connector for an external antenna, whereby said first antenna can be directly connected to said first transceiver by said first switch and said second antenna can be directly connected to said second transceiver by said second switch.

By using two different separated antennas for different frequency bands, it is possible to directly connect each antenna to the respective transceiver. Hereby, the losses between the transceiver and the antenna can be reduced and the radiated efficiency is increased.

Additionally, using different antenna elements for different frequency bands increases the isolation between signals, reduces possible interference effects and reduces the system filtering requirements.

Preferably the first switch and the second switch are low insertion loss switches.

Advantageously a control means controls the switching operation of the first switch and the second switch.

Further, advantageously the control means is coupled to the connector for sensing, if an external antenna is connected to the connector.

Preferably the control means automatically couples the first transceiver and the second transceiver to the connector when an external antenna is connected to the connector.

The antenna switch structure can be implemented in a mobile terminal of a wireless communication system, whereby the first antenna and the second antenna are placed on positions remote to each other.

The antenna switch structure according to the present invention can for example be implemented in the transceiving section of a cellular mobile phone but also in many communication devices like for example computer being wirelessly connected to a cellular network.

Embodiments of the invention will now be described, by way of example only, with reference to the accompanying drawings in which:
Fig. 1 is a block diagram showing schematically the elements of the system and
Fig. 2 is a block diagram of a preferred embodiment of the present invention.

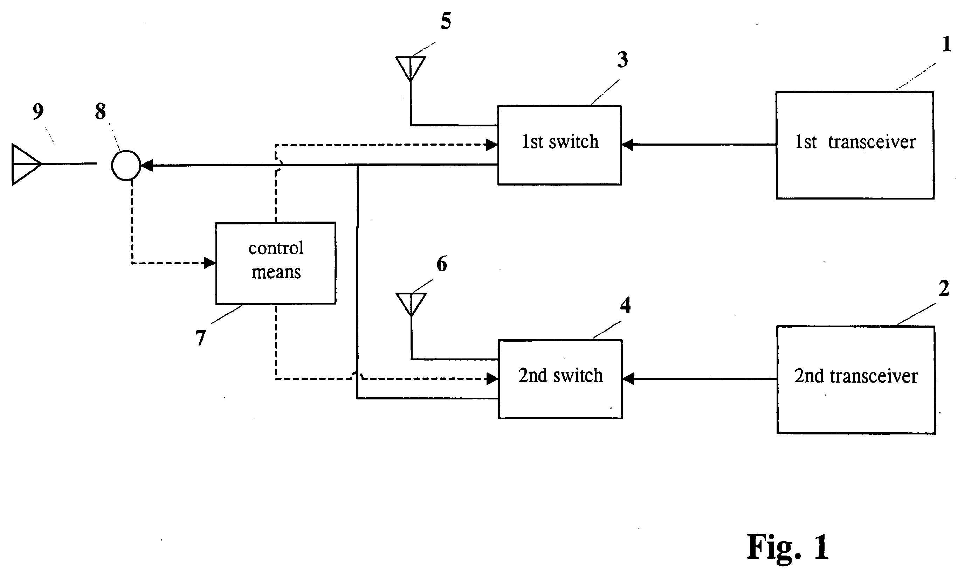

Fig. 1 shows an antenna switch structure according to the present invention. It is to be understood that in the Figures only elements important for the understanding of the present invention are shown. Further elements, such as means for base band processing or the transceiver front end are omitted for the sake of clarity.

The antenna switch structure comprises a first transceiver 1 for processing signals of a first frequency band, e.g. GSM, DCS or UMTS, and a second transceiver 2 for processing signals of a second frequency band, e.g. GSM, DCS or UMTS. The transceiver 1 and the transceiver 2 are able to receive and transmit signals. The transceivers 1, 2 may consist of separated transmitter and receiver connected to means for baseband processing (not shown).

A first antenna 5 serves for transmitting and receiving wireless signals of said first frequency band and a second antenna 6 serves for transmitting and receiving wireless signals of said second frequency band. The first antenna 5 and the second antenna 6 are internal antennas permanently implemented in the antenna switch structure. Hereby, the antenna 5 and the antenna 6 may be placed on parts of the mobile terminal remote to each other.

The first antenna 5 is directly coupled to the first transceiver 1 by a first switch 3 and the second antenna 6 is directly coupled to the second transceiver 2 by a second switch 4. Via the first switch 3 signals from the first antenna 5 are submitted to the first transceiver 1 and from the first transceiver 1 to the first antenna. In an analogous way via the second switch 4 signals are submitted from the second antenna 6 to the second transceiver 2 and from the second transceiver 2 to the second antenna 6.

Further, in the present antenna switch structure a connector 8 is implemented for connecting an external antenna 9 or for connecting means for calibration or test purposes. The external antenna 9 is able to receive and transmit signals of different frequency bands of wireless communication standards, e.g. GSM, DCS or UMTS. The connector 8 is coupled to the first transceiver 1 via the first switch 3 and is coupled to the second transceiver 2 via the second switch 4.

In case the external antenna 9 is connected to the connector 8, signals are submitted between the first transceiver 1 and the external antenna 9 via the connector 8 and the first switch 3 or between the second transceiver 2 and the external antenna 9 via the connector 8 and the second switch 4.

Hereby, the first transceiver 1 is either connected to the first antenna 5 or to the external antenna 9 by the first switch 3, that is depending on the state of the first switch 3 the signals are either submitted between the first transceiver 1 and the first antenna 3 or between the first transceiver 1 and the external antenna 8. In an analogous way, the second transceiver 2 is either connected to the second antenna 6 or to the external antenna 9 by the second switch 4.

The first switch 3 and the second switch 4 in each case may consist of a single switch or of a combination of more switches. Further, the operation of the first switch 3 is not limited to the coupling of the first transceiver 1 to either the first antenna 5 or the external antenna 9, but may also comprise the possibility of disconnecting the first transceiver 1 from both antennas, that is to interrupt the submission of signals between the first transceiver 1 and the antennas. In an analogous way the operation of the second switch 4 is not limited to the connection of the second transceiver 2 to either the second antenna 6 or the external antenna 9, but comprises also the function of interrupting the submission of signals between the second transceiver 2 and the antennas.

The operation of the first switch 3 and the second switch 4 is controlled by a control means 7, that is the control means 7 connects the first transceiver 1 by the first switch 3 to the first antenna 5, to the external antenna 9 or disconnects the first transceiver 1 and connects the second transceiver 2 by the second switch 4 to the second antenna 6, to the external antenna 9 or disconnects the second transceiver.
The control means 7 is coupled to the connector 8 and senses or receives a signal from the connector 8, if an external antenna 9 is coupled to the connector 8. The control means 7 in this case submits signals to the first switch 3 and the second switch 4 in order to change the operation of the switches. If the external antenna 9 is decoupled from the connector 8, the control means 7 again changes the operation of the switches.

The present invention is not limited to the use of two transceivers with the according antennas and switches. It is possible to use three or more transceivers, each having an internal antenna connected to the respective transceiver by a switch, which is controlled by the control means and changes operation according to the signals received from the control means. Further, each of the switches connects the respective transceiver either to the corresponding internal antenna, to the external antenna or disconnects the transceiver.

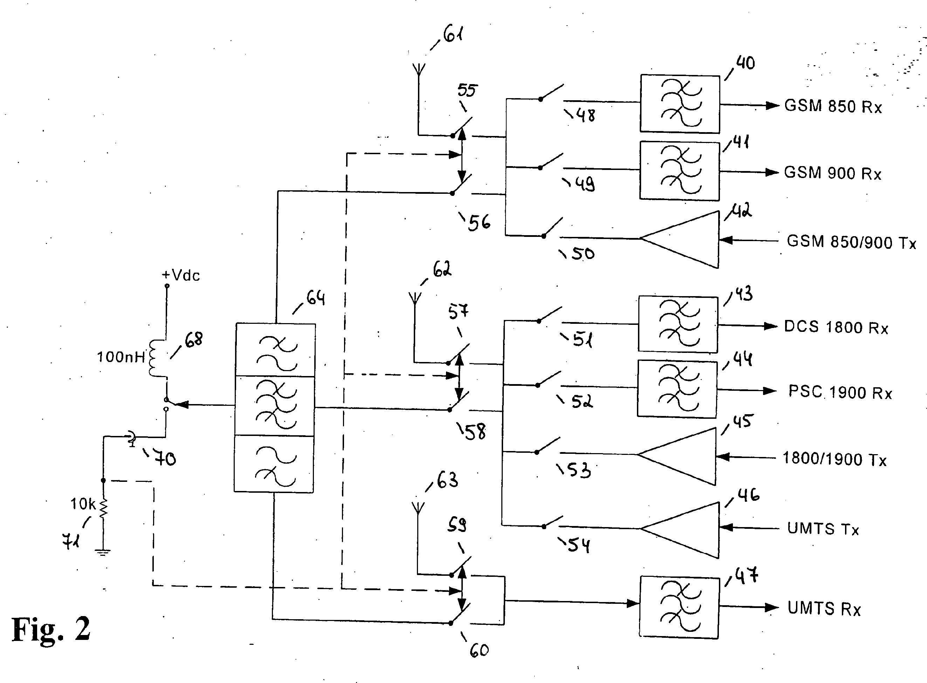

Fig. 2 shows a preferred embodiment of the antenna switch structure of the present invention.

The transceivers 40 to 47 serve for transmitting or receiving signals of different frequency bands. The Rx filter 40 receives signals of the GSM 850 band, Rx filter 41 of GSM 900 band, Rx filter 43 of DCS 1800 band, Rx filter 44 of PCS 1900 band and RX filter 47 of UMTS band. Further, the Tx power amplifier 42 transmits signals of GSM 850 and 900 band, Tx power amplifier 45 of DCS 1800 and PCS 1900 band and Tx power amplifier 46 of UMTS band.

Each of the transceivers 40 to 46 has an associated transceiver switch 48 to 54, which can be in an open or closed position in order to either connect the respective transceiver to other means, e.g. an antenna or further switches, or to disconnect the transceiver in order to interrupt the submission of signals from or to the transceiver.

Three internal antennas 61 to 63 are provided for transmitting and receiving wireless signals of different frequency bands. The transceivers 40 to 42 are connected to the first antenna 61, transceivers 43 to 46 are connected to the second antenna 62 and transceiver 47 is connected to the third antenna 63. The submission of signals between the transceivers 40 to 42 and the first antenna 61 can be selectively interrupted or admitted by the transceiver switches 48 to 50, which are connected in parallel. In an analogous way the transceivers 43 to 46 are connected to the second antenna 62 by the parallel connected transceiver switches 51 to 54.

Further, each of the antenna has an associated antenna switch 55, 57, 59, which can be in an open or closed position in order to either connect or disconnect the respective antenna to or from other switches or transceivers. In the present embodiment transceivers 40 to 42 are connected to the first antenna 61 by transceiver switches 48 to 50 and antenna switch 55, whereby the antenna switch 55 and the transceiver switches 48 to 50 are serially connected. In an analogous way transceivers 43 to 46 are connected to the second antenna 62 by transceiver switches 51 to 54 and antenna switch 57, whereby the antenna switch 57 and the transceiver switches 54 to 57 are serially connected. Transceiver 47 is connected to the third antenna 63 by antenna switch 59.

A connector 70 serves for attaching an external multiband, antenna. In this case, the internal antennas 61 to 63 are decoupled from the transceivers by the antenna switches 55, 57 and 59.

A switch 56 having an open and a closed position is connected in serial to the transceiver switches 48 to 50 and in parallel to antenna switch 55. In an analogous way a switch 58 having an open and a closed position is connected in serial to transceiver switches 51 to 54 and in parallel to antenna switch 57. A switch 60 is connected in parallel to antenna switch 59.

The transceivers 40 to 47 of all frequency bands by the transceiver switches 48 to 54 and by the switches 56, 58 and 60 can be connected via a triplexer 64 to said connector 70, which allows the submission of signals between each of the transceivers and the connector 70 for the external mulitband antenna.

To indicate when the external antenna connector 70 is in use, e.g. an external multiband antenna is attached, the inductor 68 and resistor 71 are used. In the present embodiment an inductor of 100 mH and a resistor of 10 k are used. By insertion of an external antenna to the external antenna connector 70 mechanical contacts are closed and logical high level signals taken from the resistor 71 switches the RF signals from the internal antennas 61 to 63 to the external antenna connector 70 by changing the operation of the switches 55 to 60.

By coupling the internal antennas directly to the transceivers of different frequency bands insertion losses in each band are reduced and the efficiency is increased. In case that the antenna switch structure is implemented in a mobile terminal of a wireless communication system, e.g. a mobile phone, a PDA or a computer being wirelessly connected to a cellular network, the necessary isolation is provided by connecting the external antenna connector throughout additional switch elements in a triplexer 64, which is combining different frequency bands. Further by separation of the internal antennas 61 to 63 different antenna elements can be easily placed remote to each other, which increases the isolation between different frequency bands and reduces the system filtering requirements. Further, the external antenna connector 70 and the triplexer 64 can be placed outside of the mobile terminal in a separate block.

## Claims

1. Antenna switch structure for a mobile terminal of a wireless communication system comprising
a first transceiver (1) for processing signals of a first frequency band,
a second transceiver (2) for processing signals of a second frequency band,
a first antenna (5) for transmitting and receiving wireless signals of said first frequency band, and
a first switch (3) for selectively connecting the first transceiver (1) to the first antenna (5) or to a connector (8) for an external antenna (9), wherein said first antenna (5) can be connected directly to said first transceiver (1) by said first switch (3),
**characterized by** a second antenna (6) for transmitting and receiving wireless signals of said second frequency band, and
a second switch (4) for selectively connecting the second transceiver (2) to the second antenna (6) or to said connector (8) for an external antenna (9), wherein said second antenna (6) can be connected directly to said second transceiver (2) by said second switch (4).

2. Antenna switch structure according to claim 1,
**characterised in,**
**that** a control means (7) controls the switching operation of the first switch (3) and the second switch (4).

3. Antenna switch structure according to claim 2,
**characterised in,**
**that** the control means (7) is coupled to the connector (8) for sensing, if an external antenna (9) is connected to the connector (8).

4. Antenna switch structure according to claims 2 or 3,
**characterised in,**
**that** the control means (7) automatically couples the first transceiver (1) and the second transceiver (2) to the connector (8) when an external antenna (9) is connected to the connector (8).

5. Mobile terminal of a wireless communication system comprising an antenna switch structure according to one of the preceeding claims,
whereby the first antenna (5) and the second antenna (6) are placed on positions remote to each other.

## Patentansprüche

1. Antennenschalteranordnung fiir ein mobiles Endgerät eines drahtlosen Kommunikationssystems umfassend:
einen ersten Sender (1) zum Verarbeiten von Signalen eines ersten Frequenzbandes,
einen zweiten Sender (2) zum Verarbeiten von Signalen eines zweiten Frequenzbandes,
eine erste Antenne (5) zum Senden und Empfangen von drahtlosen Signalen des ersten Frequenzbandes, und
einen ersten Schalter (3) zum wahlweisen Verbinden des ersten Senders (1) mit der ersten Antenne (5) oder mit einem Verbinder (8) für eine externe Antenne (9), wobei die erste Antenne (5) über den ersten Schalter (3) direkt mit dem ersten Sender (1) verbunden werden kann,
**gekennzeichnet durch**
eine zweite Antenne (6) zum Senden und Empfangen von drahtlosen Signalen des zweiten Frequenzbandes, und
einen zweiten Schalter (4) zum wahlweisen Verbinden des zweiten Senders (2) mit der zweiten Antenne (6) oder mit dem Verbinder (8) für eine externe Antenne (9), wobei die zweite Antenne (6) direkt mit dem zweiten Sender (2) über den zweiten Schalter (4) verbunden werden kann.

2. Antennenschalteranordnung gemäß Anspruch 1, **gekennzeichnet dadurch, dass** eine Steuereinrichtung (7) die Schaltoperation des ersten Schalters (3) und des zweiten Schalters (4) steuert.

3. Antennenschalteranordnung gemäß Anspruch 2, **gekennzeichnet dadurch, dass** die Steuereinrichtung (7) mit dem Verbinder (8) verbunden ist, um zu detektieren, ob eine externe Antenne (9) mit dem Verbinder (8) verbunden ist.

4. Antennenschalteranordnung gemäß Anspruch 2 oder 3, **dadurch gekennzeichnet, dass** die Steuereinrichtung (7) automatisch den ersten Sender (1) und den zweiten Sender (2) mit dem Verbinder (8) verbindet, wenn eine externe Antenne (9) mit dem Verbinder (8) verbunden ist.

5. Mobiles Endgerät eines drahtlosen Kommunikationssystems mit einer Antennenschalteranordnung gemäß einem der vorangehenden Ansprüche, wobei die erste Antenne (5) und die zweite Antenne (6) an voneinander entfernten Positionen angeordnet sind.

## Revendications

1. Structure de commutateurs d'antenne pour un terminal mobile d'un système de communication sans fil comprenant :
un premier émetteur-récepteur (1) destiné à traiter des signaux d'une première bande de fréquences ;
un second émetteur-récepteur (2) destiné à traiter des signaux d'une seconde bande de fréquences ;
une première antenne (5) destiné à émettre et recevoir des signaux sans fil de ladite première bande de fréquences ; et
un premier commutateur (3) destiné à connecter le premier émetteur-récepteur (1) à la première antenne (5) ou à un connecteur (8) pour une antenne externe (9), ladite première antenne (5) pouvant être connectée directement audit premier émetteur-récepteur (1) par ledit premier commutateur (3) ;
**caractérisée par** une seconde antenne (6) destinée à émettre et recevoir des signaux sans fil de ladite seconde bande de fréquences ; et
par un second commutateur (4) destiné à connecter sélectivement le second émetteur-récepteur (2) à la seconde antenne (6) ou audit connecteur (8) pour une antenne externe (9), ladite seconde antenne (6) pouvant être connectée directement audit second émetteur-récepteur (2) par ledit second commutateur (4).

2. Structure de commutateurs d'antenne selon la revendication 1, **caractérisée en ce qu'**un moyen (7) de commande commande l'opération de commutation du premier commutateur (3) et du second commutateur (4).

3. Structure de commutateurs d'antenne selon la revendication 2, **caractérisée en ce que** le moyen (7) de commande est raccordé au connecteur (8) pour détecter si une antenne externe (9) est connectée au connecteur (8).

4. Structure de commutateurs d'antenne selon la revendication 2 ou 3, **caractérisée en ce que** le moyen (7) de commande raccorde automatiquement le premier émetteur-récepteur (1) et le second émetteur-récepteur (2) au connecteur (8) lorsqu'une antenne externe (9) est connectée au connecteur (8).

5. Terminal mobile d'un système de communication sans fil comprenant une structure de commutateurs d'antenne selon l'une quelconque des revendications précédentes, au moyen de laquelle la première antenne (5) et la seconde antenne (6) sont placées à des positions distantes l'une de l'autre.
